# EUROPEAN PATENT APPLICATION

(11) **EP 4 657 063 A2**
(43) Date of publication of application: **03.12.2025**
(21) Application number: 25180271.6
(22) Date of filing: 02.06.2025
(51) Int. Cl.: G01N 29/12, G01N 29/22, G01N 29/265

(54) **PRELOAD DEVICE FOR ELECTRONIC INSPECTION SCOPE**

(30) Priority: 31.05.2024 US 202418680612
(71) Applicant: RTX Corporation, Farmington, CT 06032 (US)
(72) Inventor: CARLOZZI, Josephine M., Palm Beach Gardens, 33410 (US); COLEMAN, Ronald B., Arlington, 02474 (US); WINNEG, Nathan I., Somerville, 02143 (US)
(74) Representative: Dehns

(57) **Abstract**

An inspection method is provided during which a head (40) of an inspection scope (28) is inserted into an interior (26) of a powerplant (24). The head (40) of the inspection scope (28) includes an actuator (74). The powerplant (24) includes a component (22) located within the interior (26) of the powerplant (24). The head (40) of the inspection scope (28) is abutted against a surface (54) of the component (22) within the interior (26) of the powerplant (24). The head (40) of the inspection scope (28) is preloaded against the surface (54) of the component (22) using a preload device (32) located outside of the interior (26) of the powerplant (24). Vibrations are induced in the component (22) using the actuator (74). A vibratory response in the component (22) excited by the vibrations is measured using a sensor (44) to provide sensor (44) data.

## Description

### BACKGROUND OF THE DISCLOSURE

### 1. Technical Field

This disclosure relates generally to inspection and, more particularly, to non-destructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, an inspection method is provided during which a head of an inspection scope is inserted into an interior of a powerplant. The head of the inspection scope includes an actuator. The powerplant includes a component located within the interior of the powerplant. The head of the inspection scope is abutted against a surface of the component within the interior of the powerplant. The head of the inspection scope is preloaded against the surface of the component using a preload device located outside of the interior of the powerplant. Vibrations are induced in the component using the actuator. A vibratory response in the component excited by the vibrations is measured using a sensor to provide sensor data.

According to another aspect of the present disclosure, another inspection method is provided during which a guide tube is arranged with a powerplant component. The guide tube extends longitudinally from a base end of the guide tube to a distal end of the guide tube. The distal end of the guide tube is spaced from a surface of the powerplant component. An inspection scope is passed longitudinally through a bore of the guide tube such that a head of the inspection scope abuts against the surface of the powerplant component. The head of the inspection scope includes an actuator. The head of the inspection scope is preloaded against the surface of the component using a preload device. The preload device is coupled to the guide tube at the base end of the guide tube. Vibrations are induced in the component using the actuator. A vibratory response in the component excited by the vibrations is measured using a sensor to provide sensor data.

According to still another aspect of the present disclosure, a system is provided for inspecting a powerplant component. This system includes a guide tube, an inspection scope and a preload device. The guide tube extends longitudinally from a base end of the guide tube to a distal end of the guide tube. The inspection scope includes a scope body and a scope head connected to the scope body. The inspection scope projects longitudinally through a bore of the guide tube to a distal end of the scope head. The distal end of the scope head is configured to abut against a surface of the powerplant component with the distal end of the guide tube spaced from the surface of the powerplant component. The scope head includes an actuator. The preload device includes a base, a carriage and a spring. The base is fixedly coupled to the guide tube at the base end of the guide tube. The scope body is mounted to the carriage. The spring is arranged longitudinally between and engaged with the base and the carriage. The preload device is configured to preload the scope head against the surface of the powerplant component by moving the carriage longitudinally towards the base and longitudinally compressing the spring between the base and the carriage. The actuator is configured to induce vibrations in the powerplant component while the scope head is preloaded against the surface of the powerplant component.

The scope head may also include a sensor. The sensor may be configured to measure a vibratory response in the powerplant component excited by the vibrations to provide sensor data. The system may also include a processing device configured to process the sensor data to determine a characteristic of the powerplant component based on the sensor data.

The preload device may include a base and a carriage. The base may be fixedly coupled to a stationary structure of the powerplant. The inspection scope may be mounted to the carriage. The preloading may include moving the carriage relative to the base in a direction longitudinally along a centerline of the inspection scope towards the head of the inspection scope.

A body of the inspection scope may extend longitudinally along the centerline of the inspection scope to the head of the inspection scope. The body of the inspection scope may be mounted to the carriage.

The preload device may also include a spring that is longitudinally compressed between the base and the carriage during the preloading.

The preload device may also include a shaft and a nut. The shaft may project longitudinally out from the carriage and through an aperture in the base. The nut may be threaded onto the shaft and may longitudinally engage the base. The nut may be turned during the preloading to pull the carriage longitudinally towards the base.

A body of the inspection scope may extend longitudinally along the centerline of the inspection scope, through a bore of the shaft, and to the head of the inspection scope.

The inspection method may also include arranging a guide tube with the powerplant. The guide tube may project longitudinally into the interior of the powerplant to a distal end of the guide tube located next to the component. The inspection scope may project longitudinally through a bore of the guide tube and out of the guide tube at the distal end of the guide tube where the head of the inspection scope abuts against the surface of the component.

The base may be fixedly coupled to the stationary structure of the powerplant through the guide tube.

A body of the inspection scope may extend longitudinally along a centerline of the inspection scope to the head of the inspection scope. The centerline of the inspection scope along at least a portion of the body of the inspection scope within the interior of the powerplant may be curved.

The head of the inspection scope may also include the sensor.

The actuator may be configured as or otherwise include a piezoelectric device.

The sensor may be configured as or otherwise include a piezoelectric device.

The inspection method may also include determining a characteristic of the component using the sensor data.

The inspection method may also include detecting a defect internal to the component using the sensor data.

The powerplant may be configured as or otherwise include a turbine engine.

The component may be configured as a rotor disk.

The powerplant may be installed with an aircraft during the inserting, the abutting, the preloading, the inducing and the measuring.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIG. 2 is an illustration of a portion of the inspection system and the powerplant at a preload device.
FIG. 3 is a sectional illustration of a portion of the inspection system and the powerplant at the preload device.
FIG. 4 is a flow diagram of a method for inspecting a component of a powerplant.
FIGS. 5A and 5B are graphs of various measured resonant signatures compared to a model resonant signature.

### DETAILED DESCRIPTION

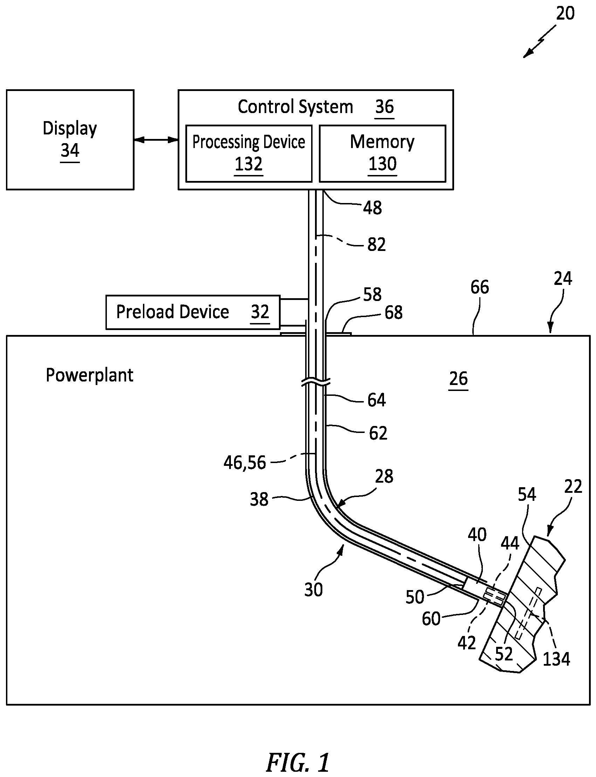

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as an inspection scope inspection system. The inspection system 20 of FIG. 1, for example, includes an electronic inspection scope 28, a guide tube 30 and a preload device 32. This inspection system 20 also includes a display 34 and a processing system 36. Examples of the display 34 include, but are not limited to, a screen, a monitor and/or a touch screen.

The inspection scope 28 may be configured as or otherwise include a borescope or another flexible or rigid elongated probe. The inspection scope 28 of FIG. 1, for example, includes a scope body 38 (e.g., a flexible tether), a scope head 40, a vibration actuator 42 and a vibration sensor 44.

The scope body 38 extends longitudinally along a longitudinal centerline 46 of the inspection scope 28 and its members 38 and 40 from a base end 48 of the inspection scope 28 to a longitudinal proximal end 50 of the scope head 40. The scope body 38 is a flexible body.

The scope head 40 is disposed at a longitudinal distal end 52 of the inspection scope 28. The scope head 40 of FIG. 1, for example, extends longitudinally along the scope centerline 46 from the head proximal end 50 to the scope distal end 52 of the inspection scope 28; here, also a longitudinal distal end of the scope head 40. The vibration actuator 42 and the vibration sensor 44 are each arranged with (e.g., mounted to and/or disposed in) the scope head 40. The vibration actuator 42 and the vibration sensor 44 of FIG. 1 are also each disposed at (e.g., on, adjacent or proximate) the scope distal end 52. At this scope distal end 52, the scope head 40 is configured to longitudinally contact, abut against or otherwise engage an exterior surface 54 of the powerplant component 22 at an inspection location for the inspection of the powerplant component 22. Here, one or more of the scope members 42 and/or 44 may also directly or indirectly engage the component surface 54 at the scope distal end 52.

The vibration actuator 42 is configured to induce vibrations in the powerplant component 22 based on a control signal received from the processing system 36. The vibration sensor 44 is configured to measure a vibratory response in the powerplant component 22 excited by the vibrations induced by the vibration actuator 42. The vibration sensor 44 is further configured to provide sensor data (e.g., an output signal or signals) to the processing system 36 indicative of the measured vibratory response.

The vibration actuator 42 and the vibration sensor 44 may be configured as or otherwise include one or more piezoelectric devices. The vibration actuator 42, for example, may be configured as or otherwise include a piezoelectric actuator. The vibration sensor 44 may be configured as or otherwise include a piezoelectric sensor. The vibration actuator 42 and the vibration sensor 44 and their piezoelectric devices may thereby be respectively configured as discrete units. The vibration actuator 42 and the vibration sensor 44, however, may alternatively be configured together into a single piezoelectric device - a piezoelectric transducer which both induces the vibrations and measures the vibratory response. Examples of the piezoelectric device(s) include, but are not limited to, a piezoelectric stack and a single crystal piezoelectric device. The piezoelectric stack may include a longitudinal stack (or multiple layers) of piezoelectric actuators. The single crystal piezoelectric device may include a piezoelectric ceramic element with a single crystal orientation and no grain boundaries. **In** general, the single crystal piezoelectric device may provide higher power and greater sensitivity than a comparable piezoelectric stack. The present disclosure, however, is not limited to the foregoing exemplary piezoelectric device configurations. Moreover, it is contemplated the vibration actuator 42 may be configured as another type of electromechanical device operable to induce vibrations, and/or the vibration sensor 44 may be configured as another type of electromechanical device operable to measure the vibratory response.

The guide tube 30 may be configured as or otherwise include a length of stiff, rigid tubing. The guide tube 30 extends longitudinally along a centerline 56 of the guide tube 30 from a base end 58 of the guide tube 30 to a distal end 60 of the guide tube 30. The tube centerline 56 of FIG. 1 is parallel with (e.g., coaxial with) the scope centerline 46. A sidewall 62 of the guide tube 30 forms an inner center bore 64 of the guide tube 30. The tube bore 64 extends longitudinally along the centerline 46, 56 through the guide tube 30 from the tube base end 58 to the tube distal end 60. At least a portion of the guide tube 30 and its tube centerline 56 may be curved (e.g., arcuate or otherwise bent) near the tube distal end 60.

The guide tube 30 may be removably mounted to the aircraft powerplant 24 for the inspection of the powerplant component 22. The guide tube 30, for example, may be rigidly attached to a stationary structure 66 (e.g., a casing, a wall, etc.) of the aircraft powerplant 24 through a guide tube mount 68. Briefly, this stationary structure 66 may house and/or form the interior 26 of the aircraft powerplant 24. The tube mount 68 may be bonded or otherwise fixed to the tube sidewall 62. The tube mount 68 of FIG. 1 projects laterally out (e.g., radially outward relative to the centerline 46, 56) from the tube sidewall 62 along a surface of the stationary structure 66. The tube mount 68 may be abutted against the stationary structure 66 and its surface. The tube mount 68 is mechanically fastened (e.g., bolted), clamped or otherwise attached to the stationary structure 66.

The guide tube 30 is configured to facilitate locating the scope head 40 and its members 42 and 44 with the powerplant component 22. The guide tube 30 of FIG. 1, for example, is configured as a guide for inserting the inspection scope 28 into the interior 26 of the aircraft powerplant 24. The guide tube 30 of FIG. 1 is also configured as a support (e.g., a frame, a backbone, an exoskeleton, etc.) for a longitudinal length of the relatively flexible inspection scope 28 and its scope body 38 which extends longitudinally from (a) a location outside of the interior 26 of the aircraft powerplant 24 to (b) a location inside of the interior 26 of the aircraft powerplant 24 next to the powerplant component 22 and its component surface 54. The inspection scope 28 of FIG. 1, for example, extends longitudinally through the guide tube 30 and its tube bore 64 from the scope base end 48 to the scope distal end 52, where both ends 48 and 52 are disposed outside of the guide tube 30. The guide tube 30 and its tube sidewall 62 provide a stiff, rigid structure for the relatively flexible inspection scope 28 and its members 38 and 40 to engage; e.g., contact, slide against, rest against, etc. The scope head 40 may thereby slide along an interior surface of the tube sidewall 62 during assembly of the inspection scope 28 with the guide tube 30. Following this assembly, the guide tube 30 may maintain an extended linear (e.g., non-buckled, non-kinked, etc.) form of the inspection scope 28 for at least the length of the inspection scope 28 within the guide tube 30.

The tube distal end 60 of FIG. 1 is (e.g., slightly) longitudinally spaced from the powerplant component 22 and its component surface 54 along the centerline 46, 56 by a gap; e.g., an air gap. By contrast, the inspection scope 28 projects longitudinally out from the tube distal end 60 to its scope distal end 52; e.g., the distal end of the scope head 40. At the scope distal end 52, the inspection scope 28 and its scope head 40 longitudinally engage the powerplant component 22 and its component surface 54 as described above. The tube distal end 60 is thereby longitudinally recessed from the scope distal end 52 along the centerline 46, 56.

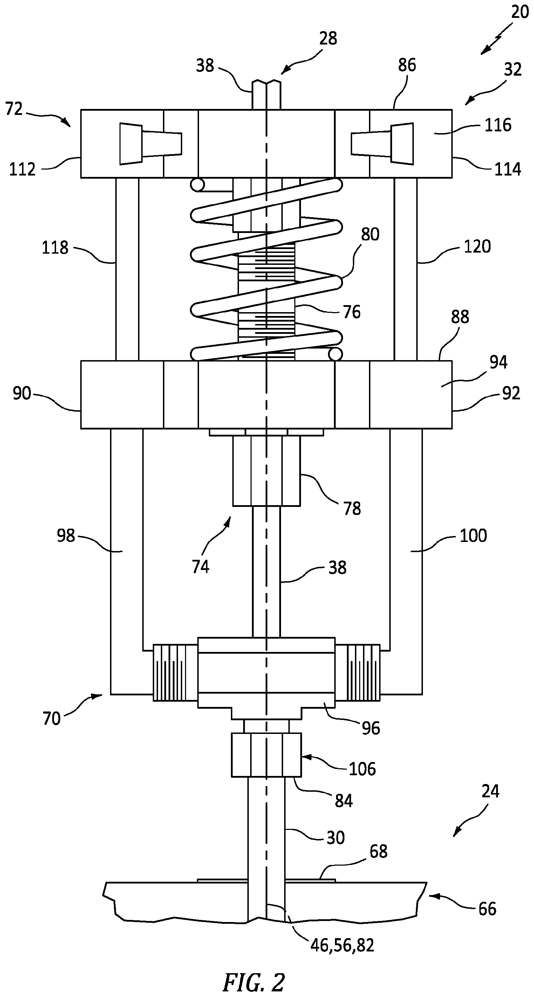

Referring to FIG. 2, the preload device 32 includes a stationary base 70, a moveable carriage 72 and an actuator 74. The device actuator 74 of FIG. 2 includes a shaft 76, a nut 78 and a spring 80 (e.g., a coil spring) or another type of biasing device. The preload device 32 extends longitudinally along a centerline 82 of the preload device 32 between an inner end 84 of the preload device 32 and an outer end 86 of the preload device 32. Herein, the terms "inner" and "outer" are used to describe positions of the device ends 84 and 86 relative to the stationary structure 66. The device centerline 82 of FIG. 2 is parallel with (e.g., coaxial with) the scope centerline 46 and/or the tube centerline 56.

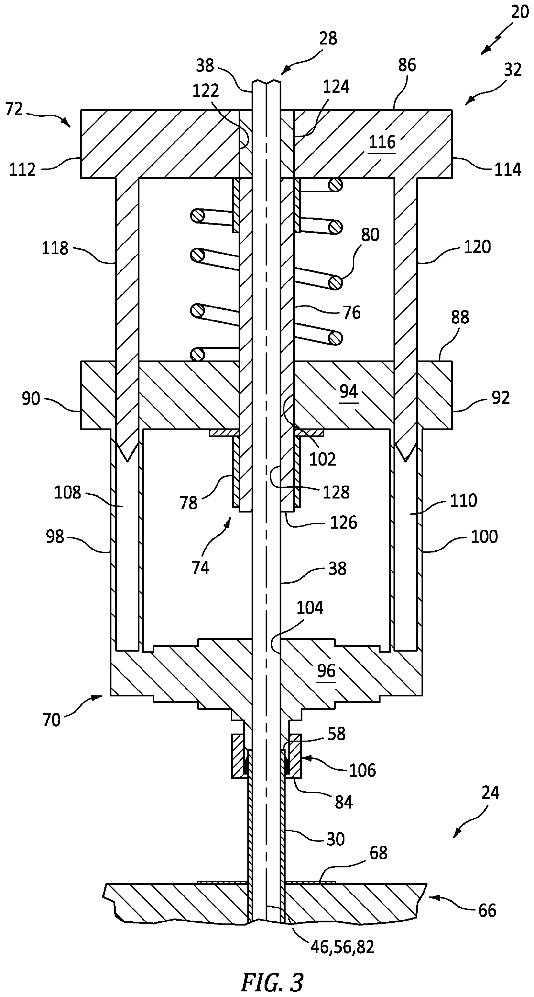

Referring to FIG. 3, the device base 70 may be configured as a stand and/or a support fixture for the device carriage 72. The device base 70 of FIG. 3 extends longitudinally along the centerline 46, 56, 82 between the device inner end 84 and an outer end 88 of the device base 70. The device base 70 extends laterally between a first side 90 of the device base 70 and a second side 92 of the device base 70. The device base 70 of FIG. 3 includes a support 94, a mount 96 and one or more struts 98 and 100.

The base support 94 is disposed at the base outer end 88 and extends laterally between the base first side 90 and the base second side 92. The base support 94 may be configured as a beam. The base support 94 of FIG. 3 includes a shaft aperture 102 which may be laterally centered between the base first side 90 and the base second side 92. This shaft aperture 102 projects longitudinally through the base support 94.

The base mount 96 is disposed at the device inner end 84 and extends laterally between the base struts 98 and 100. The base support 94 of FIG. 3 includes a guide tube aperture 104 which may be laterally centered between the base first side 90 and the base second side 92. This tube aperture 104 projects longitudinally through the base mount 96. The base mount 96 is configured to rigidly attach the device base 70 to the stationary structure 66. The base mount 96 of FIG. 3, for example, is rigidly attached to the guide tube 30 at the tube base end 58. The attachment between the base mount 96 and the guide tube 30 may be through a compression fitting 106 such as a mechanical swag lock. The guide tube 30 may project longitudinally through the attachment and longitudinally through (or partially into) the tube aperture 104. The present disclosure, however, is not limited to such an exemplary attachment technique. Moreover, it is contemplated the base mount 96 may alternatively be attached to the stationary structure 66 independent of the guide tube 30 in other embodiments.

The base struts 98 and 100 extend longitudinally between and structurally tie the base support 94 to the base mount 96. Each of the base struts 98 and 100 is connected to (e.g., bonded to or otherwise attached to) the base support 94 to the base mount 96. The base first strut 98 is disposed laterally to the base first side 90 and the base second strut 100 is disposed to the base second side 92. With this arrangement, the base struts 98 and 100 are laterally separated by a channel. This channel extends longitudinally between the base support 94 and the base mount 96, thereby longitudinally spacing the base support 94 out from the base mount 96. Each of the base struts 98 and 100 of FIG. 3 is configured with a respective guide aperture 108, 110. Each guide aperture 108, 110 projects longitudinally through the base support 94 and partially into or through the respective base strut 98, 100.

The device carriage 72 is configured to guide movement of the scope body 38 relative to the device base 70 and, thus, the guide tube 30 and the stationary structure 66. The device carriage 72 extends laterally between a first side 112 of the device carriage 72 and a second side 114 of the device carriage 72. The device carriage 72 of FIG. 3 includes a support 116 and one or more guides 118 and 120; e.g., pins, rails, etc.

The carriage support 116 is disposed at the device outer end 86 and extends laterally between the carriage first side 112 and the carriage second side 114. The carriage support 116 may be configured as a beam. The carriage support 116 of FIG. 3 includes a scope aperture 122 which may be laterally centered between the carriage first side 112 and the carriage second side 114. This scope aperture 122 projects longitudinally through the carriage support 116. This scope aperture 122 is thereby configured to receive a portion of the inspection scope 28 and its scope body 38 longitudinally therethrough. The carriage support 116 is also mounted to the portion of the inspection scope 28 and its scope body 38 which extends longitudinally through the scope aperture 122. A collar 124, for example, may be attached to the scope body 38, for example, using one or more set screws. The carriage support 116 may then be attached to the collar 124, for example, using one or more set screws. The present disclosure, however, is not limited to such an exemplary attachment technique. Moreover, it is contemplated the scope body 38 may be attached (e.g., directly) to the carriage support 116 without, for example, the collar 124.

Each of the carriage guides 118 and 120 is connected to (e.g., bonded to or otherwise attached to) the carriage support 116. The carriage first guide 118 is disposed laterally to the carriage first side 112 and the carriage second guide 120 is disposed to the carriage second side 114. Each of the carriage guides 118 and 120 projects longitudinally out from the carriage support 116 into a respective one of the guide apertures 108 and 110. With this arrangement, the carriage guides 118 and 120 may translate longitudinally within the guide apertures 108 and 110 to provide guided movement (e.g., longitudinal translation) of the device carriage 72 relative to the device base 70.

The actuator spring 80 is disposed longitudinally between the device base 70 and the device carriage 72. More particularly, the actuator spring 80 of FIG. 3 is disposed longitudinally between and engages the base support 94 and the carriage support 116.

The actuator shaft 76 is connected to (e.g., bonded to or otherwise attached to) the carriage support 116. This actuator shaft 76 projects longitudinally along the centerline 46, 56, 82 out from the carriage support 116, through a bore of the actuator spring 80 and then through the shaft aperture 102, to a distal end 126 of the actuator shaft 76. The actuator nut 78 is threaded onto the actuator shaft 76 at or near the shaft distal end 126. Here, the base support 94 is longitudinally between and engaged with the actuator spring 80 and the actuator nut 78. With this arrangement, the actuator nut 78 may be turned to facilitate movement of the device carriage 72 relative to the device base 70 along the centerline 46, 56, 82. For example, when the actuator nut 78 is turned to further thread the actuator nut 78 onto the actuator shaft 76, the actuator shaft 76 is pulled through the shaft aperture 102 pulling the carriage support 116 closer to the base support 94 and thereby compressing the actuator spring 80. However, when the actuator nut 78 is turned to partially unthread the actuator nut 78 on the actuator shaft 76, the actuator spring 80 pushes the carriage support 116 away from the base support 94 thereby at least partially or completely relaxing the actuator spring 80.

The actuator shaft 76 of FIG. 3 is a hollow shaft. The inspection scope 28 and its scope body 38 may thereby extend longitudinally through an inner bore 128 of the actuator shaft 76.

Referring to FIG. 1, the processing system 36 is configured in signal communication (e.g., hardwired and/or wirelessly coupled) with the inspection scope 28 and its scope members 42 and 44 as well as the display 34. The processing system 36 of FIG. 1 may be in signal communication with the scope members 42 and 44 through one or more (e.g., electrically conductive and/or optical) signal paths extending within the scope body 38. The processing system 36 may be implemented with a combination of hardware and software. The hardware may include memory 130 and at least one processing device 132, which processing device 132 may include one or more single-core and/or multi-core processors. The hardware may also or alternatively include analog and/or digital circuitry other than that described above.

The memory 130 is configured to store software (e.g., program instructions) for execution by the processing device 132, which software execution may control and/or facilitate performance of one or more operations such as those described below. The memory 130 may be a non-transitory computer readable medium. For example, the memory 130 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

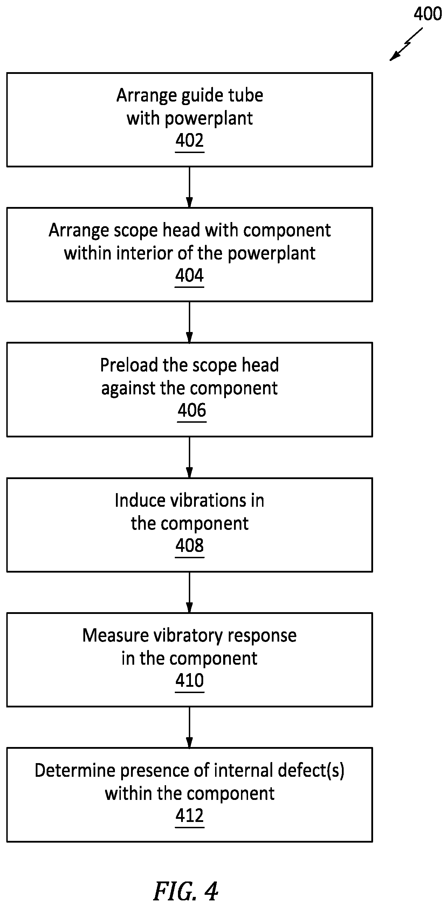

FIG. 4 is a flow diagram of a method 400 for inspecting the powerplant component 22 - a specimen component to be inspected. For ease of description, the inspection method 400 is described below with reference to the inspection system 20 of FIGS. 1-3. The powerplant component 22 is also described below as being installed with the aircraft powerplant 24 and disposed within the interior 26 of the aircraft powerplant 24, where the aircraft powerplant 24 remains installed onboard the aircraft. The inspection method 400 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 402, the guide tube 30 is arranged with the aircraft powerplant 24. In particular, an inner portion of the guide tube 30 of FIG. 1 is inserted into the interior 26 of the aircraft powerplant 24. To facilitate this insertion, an access cover, a powerplant component and/or the like may be removed from the aircraft powerplant 24 or opened to provide an access port into the interior 26 of the aircraft powerplant 24. The inner portion of the guide tube 30 may then be passed through the access port into the interior 26 of the aircraft powerplant 24. Once in position within the interior 26 of the aircraft powerplant 24, the guide tube 30 may be fixedly coupled to the stationary structure 66 using the tube mount 68. The guide tube 30 may thereby be anchored to the stationary structure 66 and fixed within the interior 26 of the aircraft powerplant 24. In this fixed position, the tube distal end 60 is (e.g., slightly) longitudinally spaced from the powerplant component 22 and its component surface 54 by a gap as described above.

In step 404, the scope head 40 is arranged with the powerplant component 22. The scope head 40, for example, is inserted into the interior 26 of the aircraft powerplant 24. More particularly, the scope head 40 is inserted into the tube bore 64. The inspection scope 28 and its scope head 40 are then passed longitudinally through the guide tube 30 and its tube bore 64 until the scope head 40 and its distal end abut against the powerplant component 22 and its component surface 54 at the inspection location.

In step 406, the scope head 40 is preloaded against the powerplant component 22 and its component surface 54 at the inspection location. The preload device 32, for example, may be assembled with and mounted to the guide tube 30 and the inspection scope 28 as described above. Once assembled, the actuator nut 78 may be turned to further thread the actuator nut 78 onto the actuator shaft 76 and pull the carriage support 116 of FIG. 3 towards the base support 94. As the carriage support 116 moves towards the base support 94, the carriage support 116 may push the scope body 38 further into the guide tube 30 and apply a longitudinal force onto the scope body 38, for example once the scope body 38 can no longer move longitudinally further into the guide tube 30. The longitudinal force may transfer longitudinally through the scope body 38 and into the scope head 40, thereby pressing the scope head 40 against the component surface 54. The scope head 40 and one or more of its members 42 and/or 44 may thereby be preloaded against the component surface 54. This preload may be equal to or greater than one or two and one-half pounds (1-2.5 lbs); e.g., between one and one-half pounds (1.5 lbs) and four and one-half pounds (4.5 lbs). The present disclosure, however, is not limited to such an exemplary preload and may change based on actuator and/or sensor specifications.

In step 408, vibrations are induced in the powerplant component 22 using the vibration actuator 42 at the inspection location. The processing system 36, for example, may signal the vibration actuator 42 to vibrate (e.g., via a control signal or provision of an electric voltage), and the vibration of the vibration actuator 42 may be transmitted into the powerplant component 22 through the preloaded contact between the scope head 40 / the vibration actuator 42 and the component surface 54. The vibrations may be induced to sweep across a range of frequencies during the step 408; e.g., a five kilohertz (5 kHz) range, a ten kilohertz (10 kHz) range, a twenty kilohertz (20 kHz) range, one hundred kilohertz (100 kHz), one hundred and forty kilohertz (140 kHz), or any other suitable range which will facilitate mapping of a response signature as described below. The vibrations may thereby be induced at multiple different frequencies spanning the frequency range.

In step 410, a vibratory response is measured in the powerplant component 22 using the vibration sensor 44 at the inspection location. This vibratory response is induced by the vibrations transmitted into the powerplant component 22 by the vibration actuator 42. The vibration sensor 44 then generates the sensor data indicative of the measured vibratory response, and provides the sensor data to the processing system 36.

In step 412, the sensor data is processed to determine whether or not the powerplant component 22 includes any internal defects 134 at and/or around the respective inspection location. Herein, the term "defect" may describe a physical anomaly present within a component which may negatively affect a useful life of that component and/or performance of that component. Examples of the internal defect(s) 134 include, but are not limited to, cracks, voids, corrosion, density variations, areas of poor solidification (e.g., sintering) and/or the like.

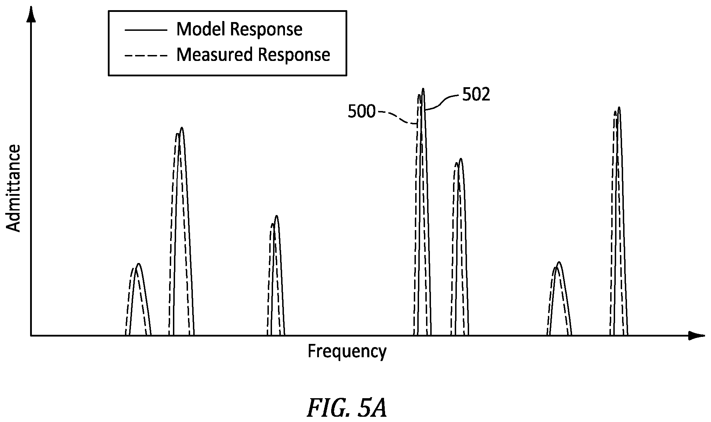

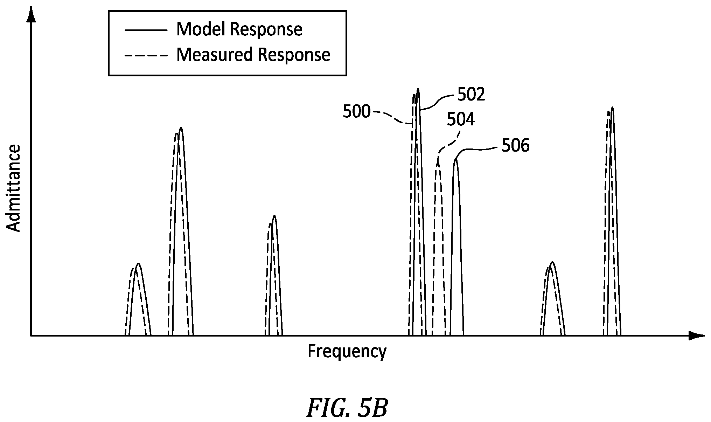

During the step 412, the processing system 36 may analyze the measured vibratory response to determine resonant frequencies and/or other structural mode parameters for the powerplant component 22. Referring to FIG. 5A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the processing system 36 may determine the powerplant component 22 does not include, or there is a low probability that the powerplant component 22 includes, any internal defects. For example, a measured resonance signature 500 of the measured resonant frequencies in FIG. 5A is the same as, or is within tolerance of, a model resonance signature 502 of expected resonant frequencies for the model component without any internal defects. Note, the matching model and measured responses are shown in FIGS. 5A and 5B slightly laterally offset for clarity of illustration. By contrast referring to FIG. 5B, where one or more of the resonant frequencies and/or other structural mode parameters do not match (or are outside tolerance of) the corresponding expected resonant frequencies and/or other structural mode parameters for the model component without any internal defects, the processing system 36 may determine the powerplant component 22 does include, or there is a high probability that the powerplant component 22 includes, one or more internal defects 134. For example, the resonance signature 500 of the measured resonant frequencies in FIG. 5B includes an outlier resonant frequency 504 which is different than (e.g., does not align with) and is outside of tolerance of a corresponding resonant frequency 506 for the resonance signature 502 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 400 and the inspection system 20 may non-destructively identify presence of internal defect(s) 134 within the powerplant component 22 while that powerplant component 22 remains installed with the aircraft powerplant 24 and/or the aircraft powerplant 24 remains installed onboard the aircraft.

When the step 412 identifies presence of no internal defects in material of the powerplant component 22, information indicative of such may be presented on the display 34. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 412 identifies the presence of internal defect(s) 134, information indicative of such may be presented on the display 34. This information may simply identify the presence of internal defects 134. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 400 is described above identifying whether or not the inspected powerplant component 22 includes any internal defects 134, this inspection method 400 may also (or alternatively) be extended to determine one or more other physical characteristics about the inspected powerplant component 22.

After performing the step 410 or 412, the inspection scope 28 and the guide tube 30 may be removed from the interior 26 of the aircraft powerplant 24. Alternatively, the inspection scope member(s) 40, 42, 44 may be (e.g., slightly) retracted from the powerplant component 22 and its component surface 54. Thus, when the powerplant component 22 is rotatable (e.g., where the powerplant component 22 is the rotor disk), the powerplant component 22 may be rotated about its rotational axis to facilitate repeating the foregoing inspection method 400 at another inspection location.

In some embodiments, the vibrations induced in the powerplant component 22 during the step 408 may have a frequency equal to or greater than thirty kilohertz (30 kHz); e.g., equal to or greater than forty kilohertz (40 kHz) or fifty kilohertz (50 kHz) up to about two hundred kilohertz (200kHz) or two hundred and fifty kilohertz (250kHz). This frequency may be a lower bound, an upper bound or an intermediate frequency within the range of frequencies swept during the vibration inducement step 408. By vibrating the powerplant component 22 at such a relatively high frequency, the inspection method 400 and/or the inspection system 20 may detect one or more internal defects 134 with a dimension (e.g., a width, a length, etc.) equal to or less than one hundred mils (0.10 inches) or one hundred and fifty miles (0.15 inches). More particularly, the inspection method 400 and/or the inspection system 20 may detect one or more internal defects 134 with a relatively small dimension equal to or less than fifty mils (0.05 inches); e.g., equal to or less than forty mils (0.04 inches). Here, the powerplant component 22 is constructed from a metal. It is contemplated, however, the vibrations may alternatively be induced at a frequency below thirty kilohertz (30 kHz) when detecting larger internal defect(s) 134 within the powerplant component 22 and/or when inspecting a powerplant component with another material construction. Moreover, the vibrations may still alternatively be induced at a frequency above two hundred and fifty kilohertz (250kHz) when detecting even smaller internal defect(s) 134 within the powerplant component 22 and/or when inspecting a powerplant component with still another material construction.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
inserting a head (40) of an inspection scope (28) into an interior (26) of a powerplant (24), the head (40) of the inspection scope (28) comprising an actuator (74), and the powerplant (24) comprising a component (22) located within the interior (26) of the powerplant (24);
abutting the head (40) of the inspection scope (28) against a surface (54) of the component (22) within the interior (26) of the powerplant (24);
preloading the head (40) of the inspection scope (28) against the surface (54) of the component (22) using a preload device (32) located outside of the interior (26) of the powerplant (24);
inducing vibrations in the component (22) using the actuator (74); and
measuring a vibratory response in the component (22) excited by the vibrations using a sensor (44) to provide sensor data.

2. The inspection method of claim 1, wherein
the preload device (32) includes a base (70) and a carriage (72), the base (70) is fixedly coupled to a stationary structure (66) of the powerplant (24), and the inspection scope (28) is mounted to the carriage (72); and
the preloading comprises moving the carriage (72) relative to the base (70) in a direction longitudinally along a centerline (82) of the inspection scope (28) towards the head (40) of the inspection scope (28).

3. The inspection method of claim 2, wherein
a body (38) of the inspection scope (28) extends longitudinally along the centerline (82) of the inspection scope (28) to the head (40) of the inspection scope (28); and
the body (38) of the inspection scope (28) is mounted to the carriage (72).

4. The inspection method of claim 2 or 3, wherein the preload device (32) further includes a spring (80) that is longitudinally compressed between the base (70) and the carriage (72) during the preloading.

5. The inspection method of any of claims 2 to 4, wherein
the preload device (32) further includes a shaft (76) and a nut (78);
the shaft (76) projects longitudinally out from the carriage (72) and through an aperture (102) in the base (70);
the nut (78) is threaded onto the shaft (76) and longitudinally engages the base (70); and
the nut (78) is turned during the preloading to pull the carriage (72) longitudinally towards the base (70).

6. The inspection method of claim 5, wherein a body (38) of the inspection scope (28) extends longitudinally along the centerline (82) of the inspection scope (28), through a bore (128) of the shaft (76), and to the head (40) of the inspection scope (28).

7. The inspection method of any of claims 2 to 6, further comprising:
arranging a guide tube (30) with the powerplant (24), the guide tube (30) projecting longitudinally into the interior (26) of the powerplant (24) to a distal end of the guide tube (30) located next to the component (22);
wherein the inspection scope (28) projects longitudinally through a bore (64) of the guide tube (30) and out of the guide tube (30) at the distal end of the guide tube (30) where the head (40) of the inspection scope (28) abuts against the surface (54) of the component (22), optionally wherein the base (70) is fixedly coupled to the stationary structure (66) of the powerplant (24) through the guide tube (30).

8. The inspection method of any preceding claim, wherein
a body (38) of the inspection scope (28) extends longitudinally along a centerline (82) of the inspection scope (28) to the head (40) of the inspection scope (28); and
the centerline (82) of the inspection scope (28) along at least a portion of the body (38) of the inspection scope (28) within the interior (26) of the powerplant (24) is curved.

9. The inspection method of any preceding claim, wherein the head (40) of the inspection scope (28) further comprises the sensor (44).

10. The inspection method of any preceding claim, wherein:
the actuator (74) comprises a piezoelectric device; and/or
the sensor (44) comprises a piezoelectric device.

11. The inspection method of any preceding claim, further comprising:
determining a characteristic of the component (22) using the sensor data; and/or
detecting a defect (136) internal to the component (22) using the sensor data.

12. The inspection method of any preceding claim, wherein one or more of:
the powerplant (24) comprises a turbine engine;
the component (22) is configured as a rotor disk; and/or
the powerplant (24) is installed with an aircraft during the inserting, the abutting, the preloading, the inducing and the measuring.

13. An inspection method, comprising:
arranging a guide tube (30) with a powerplant component (22), the guide tube (30) extending longitudinally from a base end (58) of the guide tube (30) to a distal end of the guide tube (30), and the distal end of the guide tube (30) spaced from a surface (54) of the powerplant component (22);
passing an inspection scope (28) longitudinally through a bore of the guide tube (30) such that a head (40) of the inspection scope (28) abuts against the surface (54) of the powerplant component (22), the head (40) of the inspection scope (28) comprising an actuator (74);
preloading the head (40) of the inspection scope (28) against the surface (54) of the component (22) using a preload device (32), the preload device (32) coupled to the guide tube (30) at the base end (58) of the guide tube (30);
inducing vibrations in the component (22) using the actuator (74); and
measuring a vibratory response in the component (22) excited by the vibrations using a sensor (44) to provide sensor data.

14. A system (20) for inspecting a powerplant component (22), the system (20) comprising:
a guide tube (30) extending longitudinally from a base end (58) of the guide tube (30) to a distal end of the guide tube (30);
an inspection scope (28) including a scope body (38) and a scope head (40) connected to the scope body (38), the inspection scope (28) projecting longitudinally through a bore of the guide tube (30) to a distal end of the scope head (40), the distal end of the scope head (40) configured to abut against a surface (54) of the powerplant component (22) with the distal end of the guide tube (30) spaced from the surface (54) of the powerplant component (22), and the scope head (40) comprising an actuator (74); and
a preload device (32) including a base (70), a carriage (72) and a spring (80), the base (70) fixedly coupled to the guide tube (30) at the base end (58) of the guide tube (30), the scope body (38) mounted to the carriage (72), the spring (80) arranged longitudinally between and engaged with the base (70) and the carriage (72), and the preload device (32) configured to preload the scope head (40) against the surface (54) of the powerplant component (22) by moving the carriage (72) longitudinally towards the base (70) and longitudinally compressing the spring (80) between the base (70) and the carriage (72);
wherein the actuator (74) is configured to induce vibrations in the powerplant component (22) while the scope head (40) is preloaded against the surface (54) of the powerplant component (22).

15. The system (20) of claim 14, wherein the scope head (40) further comprises a sensor (44), the sensor (44) is configured to measure a vibratory response in the powerplant component (22) excited by the vibrations to provide sensor data, and the system (20) further comprises a processing device (132) configured to process the sensor data to determine a characteristic of the powerplant component (22) based on the sensor data.
